# EUROPÄISCHE PATENTSCHRIFT

(11) **EP 3 437 977 B1**
(45) Veröffentlichungstag und Bekanntmachung des Hinweises auf die Patenterteilung: **26.10.2022**
(21) Anmeldenummer: 18184787.2
(22) Anmeldetag: 20.07.2018
(51) Int. Cl.: B62M 6/55, B62K 19/30, B62K 19/34

(54) **E-BIKE-FAHRRADRAHMEN**
E BIKE BICYCLE FRAME
CADRE POUR UNE BICYCLETTE ÉLECTRIQUE

(30) Priorität: 03.08.2017 DE 202017004040 U
(43) Veröffentlichungstag der Anmeldung: 06.02.2019
(73) Patentinhaber: Canyon Bicycles GmbH, 56073 Koblenz (DE)
(72) Erfinder: Lay, Lorenz, 56068 Koblenz (DE); Thoma, Vincenz, 56068 Koblenz (DE)
(74) Vertreter: dompatent von Kreisler Selting Werner - Partnerschaft von Patent- und Rechtsanwälten mbB

(56) Entgegenhaltungen:
- EP-A1- 2 998 212
- EP-A1- 3 118 096
- CN-U- 205 998 068
- CN-U- 206 344 945
- DE-A1-102013 107 623
- DE-U1- 20 012 972
- DE-U1-202011 000 601
- JP-A- 2000 302 074
- US-A1- 2013 241 169
- US-A1- 2016 375 956

## Beschreibung

Die Erfindung betrifft einen E-Bike-Fahrradrahmen, insbesondere einen E-Bike-Fahrradrahmen für Mountainbikes.

Fahrradrahmen mit einem Elektromotor, sogenannte E-Bikes, die auch sogenannte Pedelecs mit umfassen, weisen einen Elektromotor auf, der üblicherweise mit dem Tretlager verbunden ist. Die zum Betreiben des Elektromotors erforderliche Batterie kann hierbei im Bereich des Gepäckträgers, im Bereich eines Sattelrohrs sowie im Bereich eines Unterrohrs des Fahrradrahmens angeordnet sein. Vorteilhaft ist die Anordnung der Batterie im Bereich des Unterrohrs, da hierdurch ein verhältnismäßig tiefer Schwerpunkt des Fahrrads gewährleistet werden kann. Dies ist für die Fahrdynamik äußerst wichtig. Andererseits weist das Anordnen der Batterie im Bereich des Unterrohrs, beispielsweise auf dem Unterrohr, den Nachteil auf, dass das Verlegen von Kabeln, hydraulischen Leitungen und insbesondere Schaltzügen, wie Bowdenzügen, schwierig ist. Insbesondere bei Schaltzügen besteht die Notwendigkeit, diese mit möglichst geringen Radien zu verlegen. Bei engen Radien können Beschädigungen auftreten. Insbesondere ist der Verschleiß erhöht und die Zuverlässigkeit der Funktion ggf. nicht gewährleistet.

Aus DE202011000601U ist ein Fahrradrahmen bekannt, an dessen Unterrohr eine Batterie angeordnet ist. Das Unterrohr weist mehrere nebeneinanderliegende Kammern auf, wobei in den äußeren Kammern Kabel angeordnet werden können. Oberhalb der Kammern ist die Batterie angeordnet.

Des Weiteren ist aus US 2013/0241169 ein Fahrradrahmen bekannt, bei dem das Unterrohr die Batterie teilweise U-förmig umgibt und in dem Unterrohr Kanäle vorgesehen sind, in denen Kabel und/oder dergleichen angeordnet werden können.

Aus US 2016/375956 ist ein E-Bike bekannt, das ein an einer Tretlageraufnahme angeordnetes und mit einem Elektromotor verbundenes Tretlager aufweist. Ferner ist eine Batterie vorgesehen, die mit einem Unterrohr des E-Bike Fahrradrahmens verbunden ist. Dokument US 2016/375956 offenbart den Oberbegriff des Anspruchs 1.

Aufgabe der Erfindung ist es, einen E-Bike-Fahrradrahmen zu schaffen, der einen günstigen Schwerpunkt aufweist und bei dem die Verlegung von Kabeln, Leitungen und/ oder -Zügen verbessert ist.

Die Lösung der Aufgabe erfolgt erfindungsgemäß durch die Merkmale des Anspruchs 1.

Der erfindungsgemäße E-Bike-Fahrradrahmen weist ein Unterrohr sowie ggf. ein mit diesem verbundenes Oberrohr auf. Ggf. kann der Fahrradrahmen auch beispielsweise als Tiefeinsteiger oder Trekking-Damenrad ausgebildet sein und insofern kein Oberrohr aufweisen. Die Verbindung zwischen dem Unterrohr und dem ggf. vorgesehenen Oberrohr erfolgt vorzugsweise über ein Gabelrohr. Das Gabelrohr dient zur Aufnahme eines mit der Gabel verbundenen Gabelschafts. Ferner weist der Fahrradrahmen ein Sattelrohr auf. Das Sattelrohr kann mittelbar oder unmittelbar mit dem Unterrohr verbunden sein. Ggf. kann eine mittelbare Verbindung zwischen Sattelrohr und Unterrohr über eine Tretlageraufnahme oder eine Motoraufnahme erfolgen. Das Sattelrohr ist üblicherweise mit dem Oberrohr verbunden und dient vorzugsweise zur Aufnahme eines einen Sattel tragenden Sattelstützrohrs.

Ferner weist der E-Bike-Fahrradrahmen eine Tretlageraufnahme auf. Diese dient zur Aufnahme des Tretlagers. Das Tretlager weist eine mit den Pedalen verbundene Tretkurbel auf. Das Tretlager ist hierbei vorzugsweise mittelbar oder unmittelbar mit dem Unterrohr und/ oder mittelbar oder unmittelbar mit dem Sattelrohr verbunden. Des Weiteren ist ein Elektromotor vorgesehen, der insbesondere über Zahnräder oder einem Zahnriemen mit dem Tretlager verbunden ist. Hierbei kann ein Motorgehäuse bzw. eine Motoraufnahme mit dem Tretlageraufnahmeelement verbunden oder einstückig mit diesem ausgebildet sein. Ferner kann das Motorgehäuse mittelbar oder unmittelbar mit dem Unterrohr und/ oder mittelbar oder unmittelbar mit dem Sattelrohr verbunden sein.

Da es sich bei dem erfindungsgemäßen E-Bike-Fahrradrahmen insbesondere um einen Fahrradrahmen für ein Mountainbike handelt, weist der Fahrradrahmen einen insbesondere schwenkbaren Hinterbau auf. Kabel, Leitungen oder Züge sind nahe einem Hauptschwingenlager des Hinterbaus angeordnet. Erfindungsgemäß sind die Kabel, Leitungen oder Züge in einem Abstand von weniger als 5 cm, insbesondere weniger als 2 cm zur Drehachse des Hauptschwingenlagers angeordnet. Dies hat den Vorteil, dass beim Ein- und Ausfedern des Hinterbaus die entsprechenden Kabel, Züge oder Leitungen weniger belastet werden. Das Hauptschwingenlager ist das Lager mit dem üblicherweise die Kettenstreben, d.h. die unteren Streben des Hinterbaus verbunden sind. Vorzugsweise ist das Hauptschwingenlager mit dem Tretlageraufnahmeelement und/ oder dem Sattelrohr verbunden.

In bevorzugter Weiterbildung ist das Tretlager Bestandteil einer den Elektromotor aufweisenden Motor-Baugruppe. Sofern das Tretlager Bestandteil einer den Elektromotor aufweisenden Motor-Baugruppe ist, ist es besonders bevorzugt, dass die Motor-Baugruppe mittels einer Motoraufnahme mit dem Unterrohr und/ oder dem Sattelrohr verbunden ist.

Bei sämtlichen vorstehend beschriebenen bevorzugten Ausführungsformen ist es besonders bevorzugt, dass zwischen dem Unterrohr und der Tretlageraufnahme oder der Motoraufnahme eine feste Verbindung besteht, sodass hierdurch eine steife Einheit ausgebildet ist. Bevorzugt ist es hierbei ferner, dass insbesondere zusätzlich auch das Kanalelement fest mit der Tretlageraufnahme oder der Motoraufnahme verbunden ist. Insbesondere ist hierbei das Kanalelement mit einer Oberseite der Tretlageraufnahme oder Motoraufnahme und das Unterrohr mit einer Vorder- oder Unterseite der Tretlageraufnahme oder der Motoraufnahme verbunden. Die Tretlageraufnahme oder Motoraufnahme ist somit zweiseitig von dem Kanalelement und dem Unterrohr gehalten, bzw. insbesondere fest mit diesen beiden Bauteilen verbunden. Hierdurch ist eine steife Ausgestaltung des Fahrradrahmens realisiert und insbesondere eine gute Kraftübertragung von der Motorbaugruppe, d.h. der Einheit aus Tretlager und Elektromotor auf den Fahrradrahmen gewährleistet.

Anstelle eines mit dem Fahrradrahmen verbundenen Elektromotors kann auch ein insbesondere in das Hinterrad integrierter Nabenmotor zum Antrieb des E-Bikes vorgesehen sein.

Ferner ist der Fahrradrahmen derart ausgebildet, dass er mit einer Batterie verbindbar ist. Hierbei ist die Batterie entweder direkt mit dem Unterrohr verbunden oder es ist eine entsprechende Batterieaufnahme vorgesehen, die mit dem Unterrohr verbunden ist. Von der Batterieaufnahme kann die Batterie insbesondere zum Laden gelöst werden. Durch Anordnen der Batterie im Bereich des Unterrohrs ist ein relativ tiefer Schwerpunkt realisiert. Hierbei kann die Batterie mit einer Oberseite, einer Unterseite oder auch seitlich mit dem Unterrohr verbunden sein. Um einen möglichst tiefen Schwerpunkt zu realisieren ist es ferner bevorzugt, dass die Batterie bzw. die Batterieaufnahme nahe an der Tretlageraufnahme bzw. der Motoraufnahme angeordnet ist, insbesondere unmittelbar an diese angrenzt.

Erfindungsgemäß weist der E-Bike-Fahrradrahmen ein seitlich neben der Batterie bzw. seitlich neben einer Batterieaufnahme angeordnetes Kanalelement auf. Das Kanalelement dient zur Aufnahme von elektrischen Kabeln, Schaltzügen und Bremszügen und/ oder Hydraulikleitungen oder dgl. Durch ein derartiges Kanalelement ist es möglich, die entsprechenden Kabel, Leitungen oder Züge vorteilhaft anzuordnen. Auch kann hier der unmittelbar elektrische Kontakt für die Batterie vorgesehen sein.

In einer besonders bevorzugten Ausführungsform des E-Bike-Fahrradrahmens ist das Kanalelement derart ausgebildet und angeordnet, dass es zur Versteifung des Fahrradrahmens dient. Hierzu ist das Kanalelement mit dem Unterrohr fest verbunden oder einstückig mit diesem ausgebildet. Insbesondere ist das Kanalelement aus demselben oder einem ähnlichen Material wie das Unterrohr hergestellt. Das Kanalelement erstreckt sich vorzugsweise über mehr als die Hälfte der Länge des Unterrohrs. Hierdurch kann eine entsprechende Versteifung erzielt werden. Bevorzugt ist es, dass das Kanalelement sich über mindestens zwei Drittel der Länge des Unterrohrs, insbesondere über die gesamte Länge des Unterrohrs erstreckt. Hierbei ist es bevorzugt, dass das Kanalelement an seinem oberen Ende mit dem Oberrohr und/ oder dem Gabelrohr und an seinem unteren Ende mit dem Tretlageraufnahmeelement und/ oder dem Motorgehäuse bzw. der Motoraufnahme verbunden ist.

Zur weiteren Verbesserung der Versteifung ist es besonders bevorzugt, dass das Kanalelement einen geschlossenen, beispielsweise im Wesentlichen rechteckigen Querschnitt aufweist. Hierbei kann eine Unterseite dieses geschlossenen Querschnitts durch das Unterrohr erfolgen. Bevorzugt ist es weiter, dass auch das Unterrohr einen geschlossenen Querschnitt aufweist.

Die in dem Kanalelement angeordneten Kabel, Leitungen und/ oder Züge sind vorzugsweise im Wesentlichen vertikal übereinander angeordnet, so dass das Kanalelement eine verhältnismäßig geringe Breite aufweisen kann. Insbesondere weist das Kanalelement eine Breite von 4 - 15, insbesondere 4 - 12 mm auf. Die Höhe des Kanalelements ist insbesondere abhängig von der Anzahl der im Kanalelement angeordneten Kabel, Züge oder Leitungen und beträgt vorzugsweise 15 - 50 mm, insbesondere 25 - 45 mm.

Des Weiteren ist es möglich, anstelle elektrischer Leitungen im Kanalelement ein Leiterbahnelement anzuordnen. Hierdurch ist insbesondere auch auf einfache Weise eine elektrische Verbindung mit der Batterie möglich.

Bei einer weiteren besonders bevorzugten Ausführungsform des erfindungsgemäßen E-Bike-Fahrradrahmens verläuft eine Mittelinie des Unterrohrs unterhalb des Tretlagers und vorzugsweise unterhalb der Tretlageraufnahme. Durch eine derartig tiefe Anordnung des Unterrohrs ist es möglich, auch eine tiefe Anordnung der Batterie bzw. der Batterieaufnahme vorzusehen. Insbesondere verläuft die Mittellinie des Unterrohrs in einem vertikalen Abstand zum Tretlager, d.h. zur Mittellinie des Tretlagers von mindestens 5 cm, insbesondere mindestens 10 cm und besonders bevorzugt mindestens 15 cm.

Bei einer weiteren bevorzugten Ausführungsform ist zusätzlich zu dem Kanalelement ein Versteifungselement vorgesehen. Das Versteifungselement ist vorzugsweise dem Kanalelement gegenüberliegend, d.h. auf der gegenüberliegenden Seite der Batterie, angeordnet. Das Versteifungselement ist vorzugsweise fest oder einstückig mit dem Unterrohr verbunden. Insbesondere ist hierdurch eine zu einer Mittelebene des Unterrohrs bzw. des Fahrradrahmens symmetrische Ausgestaltung des Unterrohrs zusammen mit dem Kanalelement und dem Versteifungselement gegeben. Das Versteifungselement ist vorzugsweise entsprechend dem Kanalelement ausgebildet und erstreckt sich vorzugsweise auch über dieselbe Länge des Unterrohrs wie das Kanalelement. Insbesondere ist das Versteifungselement auch hohl ausgebildet und kann somit ebenfalls zur Aufnahme von Kabel, Zügen oder -Leitungen dienen.

Des Weiteren ist es bevorzugt, dass das Kanalelement und/ oder das Versteifungselement mit der Tretlageraufnahme verbunden sind. Insbesondere erfolgt eine Verbindung mit einer Oberseite der Tretlageraufnahme. Insofern verläuft das Kanalelement und/ oder das Versteifungslement oberhalb der Tretlageraufnahme. Durch die Verbindung kann eine weitere Versteifung realisiert werden. Ggf. ist das Kanalelement und/ oder das Versteifungselement daher zusätzlich oder anstelle der Verbindung mit dem Tretlageraufnahmeelement mit dem Motorgehäuse verbunden.

Nachfolgend wird die Erfindung anhand einer bevorzugten Ausführungsform unter Bezugnahme auf die anliegenden Zeichnungen näher erläutert.

Es zeigen:
- Fig. 1: eine schematische Seitenansicht einer erfindungsgemäßen Ausführungsform eines E-Bike-Fahrradrahmens,
- Fig. 2: eine schematische Schnittansicht entlang der Linie II-II in Fig. 1, und
- Fig. 3a u.b: schematische Schnittansichten entsprechend der in Fig. 2 dargestellten Schnittansicht, alternativer Ausführungsformen.

Der dargestellte E-Bike-Fahrradrahmen weist ein Oberrohr 10, ein mit dem Oberrohr 10 über ein Gabelrohr 12 verbundenes Unterrohr 14 sowie ein Sattelrohr 16 auf. Das Sattelrohr 16 ist über ein Verbindungselement 18 des Oberrohrs 10 mit diesem verbunden. Ferner ist das Sattelrohr 16 mit einem Gehäuse 20 verbunden. Das Gehäuse 20 dient im dargestellten Ausführungsbeispiel sowohl als Tretlageraufnahmeelement, das ein Tretlager 22 aufnimmt, sowie auch als Gehäuse für einen Elektromotor 24. In der dargestellten besonders bevorzugten Ausführungsform ist das Gehäuse 20 somit als gemeinsames Gehäuse für die Motor-Baugruppe ausgebildet, die insbesondere das Tretlager 22 und den Elektromotor 24 sowie ggf. ein zwischengeschaltetes Getriebe, Zahnräder und dergleichen aufweist.

Des Weiteren ist das Sattelrohr 16 mit einem Hinterbau 26 verbunden. Da es sich bei dem dargestellten Fahrradrahmen insbesondere um einen Mountainbikerahmen handelt, der mit einem gefederten Hinterbau 26 verbunden ist, sind die Kettenstreben 28 des Hinterbaus 26 über ein Hauptschwingenlager 30 mit dem Sattelrohr 16 sowie auch mit dem Gehäuse 20 verbunden.

Des Weiteren sind Sattelstreben 32 des Hinterbaus 26 über weitere Gelenke 34, 36 sowie einer entsprechenden Wippe mit einer im dargestellten Ausführungsbeispiel am Oberrohr angeordneten Dämpferelement 38 verbunden. Selbstverständlich sind auch übliche andere Anordnungen des Dämpferelements und Ausgestaltungen des Hinterbaus möglich.

Mit einer Oberseite des Unterrohrs 14 ist eine Batterie 40 verbunden. Dies erfolgt üblicherweise über eine Batterieaufnahme, so dass die Batterie insbesondere zum Laden abgenommen werden kann.

Das Unterrohr 14, dass erfindungsgemäß mit dem Gehäuse 20 mittelbar oder unmittelbar insbesondere fest verbunden ist, weist im dargestellten Ausführungsbeispiel ein offenes Ende auf, d.h. das Unterrohr 14 ist nicht wie häufig üblich mit dem Sattelrohr 16 verbunden. Vielmehr erfolgt eine Verbindung zwischen Unterrohr 14 und Sattelrohr 16 ausschließlich über das Gehäuse 20 sowie ggf. zusätzlich über das oberhalb des Gehäuses 20 angeordnete Kanalelement 42.

Seitlich neben der Batterie 40 ist ein Kanalelement 42 angeordnet. Das Kanalelement 42 ist mit dem Unterrohr 14 fest verbunden bzw. einstückig mit diesem ausgebildet. Ferner erstreckt sich das Kanalelement 42 im dargestellten Ausführungsbeispiel über mehr als zwei Drittel der Länge des Unterrohrs. Des Weiteren verläuft das Kanalelement 42 im dargestellten Ausführungsbeispiel oberhalb des Gehäuses 20, d.h. oberhalb des Tretlageraufnahmeelements sowie des Motorgehäuses. Ferner ist das Kanalelement 42 mit einer Oberseite des Gehäuses 20 fest verbunden. Im Übrigen ist das Kanalelement 42 ggf. auch mit dem Sattelrohr 16 im Bereich des Hauptschwingenlagers 30 verbunden.

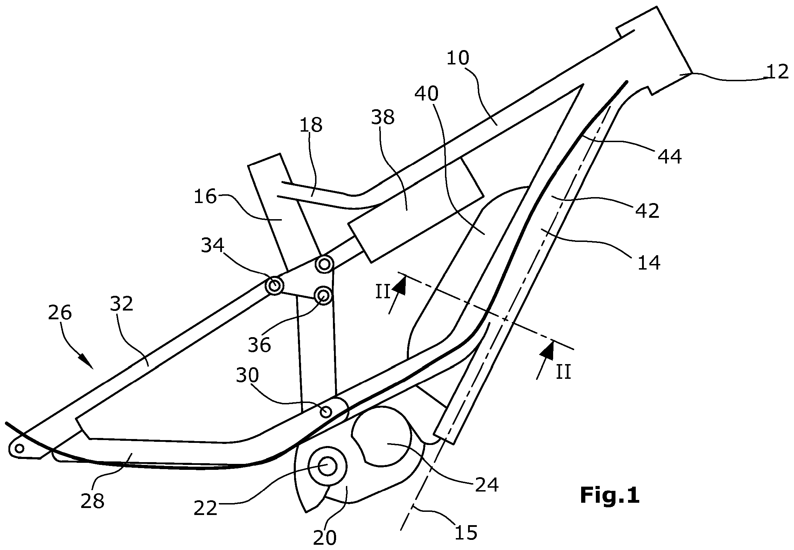

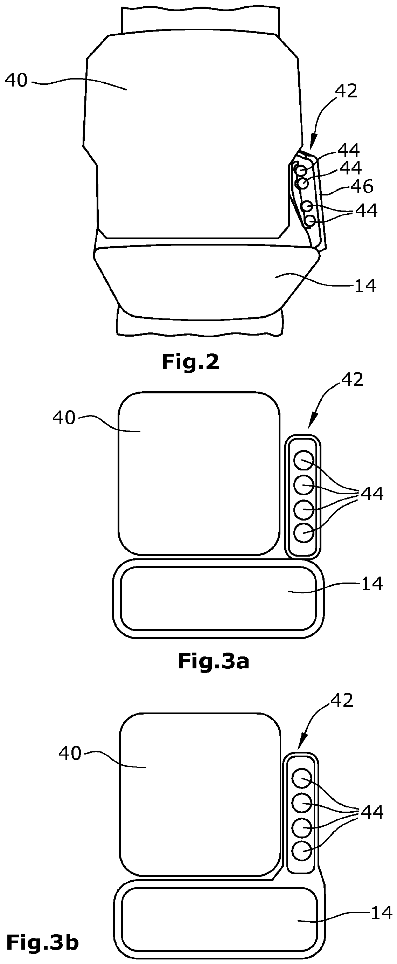

Innerhalb des Kanalelements 42 sind insbesondere vertikal übereinander (Fig. 2) elektrische Leitungen, hydraulische Leitungen und/ oder Bowdenzüge 44 vorgesehen. Eine der Leitungen 44 ist in Fig. 1 durch eine schwarze Linie verdeutlicht. Hieraus ist ersichtlich, dass die Leitung 44 in dem Kanalelement 42 verläuft und sodann insbesondere oberhalb des Gehäuses 20 angeordnet werden kann. Ferner verläuft die Leitung 44 oder dgl. nahe am Hauptschwingenlager, so dass entsprechend geringe Biegungen auf die Leitung und dergleichen einwirken. Bei der insbesondere in Richtung des Hinterbaus 26 verlaufenden Leitung handelt es sich beispielsweise um hydraulische Bremsleitungen, um Bowdenzüge für eine Bremse oder eine Schaltung oder auch um elektrische Leitungen für eine Schaltung oder eine Beleuchtung und dgl.

Im dargestellten Ausführungsbeispiel gemäß Fig. 2 ist das Kanalelement 42 im Wesentlichen durch ein in Richtung der Batterie 40 offenes Element 46 ausgebildet. Dieses ist fest mit dem Unterrohr 14 verbunden. Die einzelnen Kabel, Hydraulikleitungen etc. 44 können über entsprechende Halteelemente in dem Element 46 des Kanalelements 42 fixiert werden.

Des Weiteren ist das Unterrohr (14) derart angeordnet, dass eine Mittellinie (15) des Unterrohrs unterhalb des Tretlagers (20) verläuft. Insbesondere verläuft die Mittellinie (15) unterhalb des Gehäuses (20), das das Tretlager (22) aufnimmt. Ein vertikaler Abstand ist hierbei vorzugsweise größer als 5 cm, insbesondere größer als 10 cm und besonders bevorzugt größer als 15 cm. Wie in den Fign. 3a und 3b skizziert, kann das Kanalelement 42 auch einen in sich geschlossenen, insbesondere im Wesentlichen rechteckigen Querschnitt aufweisen. Dieser kann mit dem ebenfalls einen geschlossenen Querschnitt aufweisenden Unterrohr 14 verbunden sein (Fig. 3a) oder einstückig mit diesem ausgebildet sein (Fig. 3b).

Ein vorzugsweise entsprechend dem Kanalelement 42 ausgebildetes Versteifungselement könnte zusätzlich in den Fign. 3a oder 3b auf der linken Seite vorgesehen sein. Die Batterie wäre sodann ggf. etwas schmaler ausgebildet.

## Patentansprüche

1. E-Bike-Fahrradrahmen, mit
einem Unterrohr (14),
einem mit dem Unterrohr (14) verbundenen Sattelrohr (16),
einer mit dem Unterrohr (14) verbundenen Batterie (40),
einem in einer Tretlageraufnahme (20) angeordneten und mit einem Elektromotor (24) verbundenen Tretlager (22), und
einem schwenkbaren Hinterbau (26)
**gekennzeichnet durch**
ein seitlich neben der Batterie (40) angeordneten Kanalelement (42) zur Aufnahme von elektrischen Kabeln, Schaltzügen, Bremszügen und/ oder Hydraulikleitungen (44),
wobei zum Hinterbau (26) führende Kabel, Leitungen oder Bowdenzüge in einem Abstand von weniger als 5 cm zur Drehachse des Hauptschwingenlagers (30) des Hinterbaus angeordnet sind,
wobei das Unterrohr (14) ein offenes Ende aufweist und ausschließlich über die Tretlageraufnahme (20), sowie ggf. zusätzlich über das oberhalb der Tretlageraufnahme (20) angeordnete Kabelelement (42) mit dem Sattelrohr (16) verbunden ist.

2. E-Bike-Fahrradrahmen nach Anspruch 1, **dadurch gekennzeichnet, dass** das Tretlager (22) Bestandteil einer den Elektromotor (24) aufweisenden Motor-Baugruppe ist.

3. E-Bike-Fahrradrahmen nach Anspruch 2, **dadurch gekennzeichnet, dass** die Motor-Baugruppe mittels einer Motoraufnahme mit dem Unterrohr (14) und/ oder dem Sattelrohr (16) verbunden ist.

4. E-Bike Fahrradrahmen nach einem der Ansprüche 1 bis 3, **dadurch gekennzeichnet, dass** die Kabel, Leitungen oder Züge in einem Abstand von weniger als 2 cm zur Drehachse des Hauptschwingenlagers (30) angeordnet sind.

5. E-Bike-Fahrradrahmen nach 1 bis 4, **dadurch gekennzeichnet, dass** das Unterrohr mit einem Gabelrohr verbunden ist, wobei vorzugsweise mit dem Gabelrohr ein Oberrohr (10) verbunden ist, wobei das Oberrohr (10) vorzugsweise mit dem Sattelrohr (16) verbunden ist.

6. E-Bike-Fahrradrahmen nach einem der Ansprüche 1 - 5, **dadurch gekennzeichnet, dass** das Kanalelement (42) zur Versteifung des Fahrradrahmens mit dem Unterrohr (14) fest verbunden oder einstückig ausgebildet ist.

7. E-Bike-Fahrradrahmen nach einem der Ansprüche 1 - 6, **dadurch gekennzeichnet, dass** das Kanalelement (42) einen geschlossenen Querschnitt aufweist.

8. E-Bike-Fahrradrahmen nach einem der Ansprüche 1 - 7, **gekennzeichnet durch** ein dem Kanalelement (42) gegenüberliegendes Versteifungselement, das vorzugsweise fest mit dem Unterrohr (14) verbunden oder einstückig ausgebildet ist.

9. E-Bike-Fahrradrahmen nach einem der Ansprüche 1 - 7, **dadurch gekennzeichnet, dass** in dem Kanalelement (42) mehrere Kabelleitungen und/ oder Züge vertikal übereinander angeordnet sind.

10. E-Bike-Fahrradrahmen nach einem der Ansprüche 1 - 9, **dadurch gekennzeichnet, dass** in dem Kanalelement (42) für die elektrischen Verbindungen ein Leiterbahnelement angeordnet ist.

11. E-Bike-Fahrradrahmen nach einem der Ansprüche 1 - 10, **dadurch gekennzeichnet, dass** eine Mittellinie (15) des Unterrohrs (14) unterhalb des Tretlagers (22) vorzugsweise in einem vertikalen Abstand von mindestens 5 cm, insbesondere mindestens 10 cm und besonders bevorzugt mindestens 15 cm verläuft.

12. E-Bike-Fahrradrahmen nach einem der Ansprüche 1 - 11, **dadurch gekennzeichnet, dass** das Kanalelement (42) mit dem Tretlageraufnahmeelement (22), insbesondere einer Oberseite des Tretlageraufnahmeelements (22) verbunden ist.

13. E-Bike-Fahrradrahmen nach einem der Ansprüche 4 - 11, **dadurch gekennzeichnet, dass** das Kanalelement (42) mit der Motoraufnahme, insbesondere einer Oberseite der Motoraufnahme verbunden ist.

## Claims

1. E-bike frame comprising
a downtube (14),
a seat tube (16) connected with the downtube (14), and
a battery (40) connected with the downtube (14),
a bottom bracket (22) arranged in a bottom bracket receptacle (20) and connected with an electric motor (24), and
a swivel-mounted rear frame structure (26),
**characterized by**
a channel element (42) arranged laterally beside the battery (40) provided for receiving electric wires, shift cables, brake cables and/or hydraulic lines (44),
wherein wires, lines and/or Bowden cables leading to the rear frame structure (26) are arranged at a distance of less than 5 cm to the rotation axis of the main link bearing (30) of the rear frame structure,
wherein the downtube (14) has an open end and is connected to the seat tube (16) exclusively via the bottom bracket receptacle (20) as well as, if required, additionally via the channel element (42) arranged above the bottom bracket receptacle (20).

2. E-bike frame according to claim 1, **characterized in that** the bottom bracket (22) is part of a motor assembly comprising the electric motor (24).

3. E-bike frame according to claim 2, **characterized in that** the motor assembly is connected with the downtube (14) and/or the seat tube (16) via a motor receptacle.

4. E-bike frame according to any one of claims 1 to 3, **characterized in that** the wires, lines or cables leading are arranged at a distance of less than 2 cm to the rotation axis of the main link bearing (30).

5. E-bike frame according to any one of claims 1 to 4, **characterized in that** the downtube is connected with a head tube, the head tube preferably being connected with a top tube (10), the top tube (10) preferably being connected with the seat tube (16).

6. E-bike frame according to any one of claims 1 - 5, **characterized in that** the channel element (42) is fixedly connected or formed integrally with the downtube (14) to reinforce the bicycle frame.

7. E-bike frame according to any one of claims 1 - 6, **characterized in that** the channel element (42) has a closed cross section.

8. E-bike frame according to any one of claims 1 - 7, **characterized by** a reinforcing element arranged opposite the channel element (42), which reinforcing element is preferably fixedly connected or formed integrally with the downtube (14).

9. E-bike frame according to any one of claims 1 - 7, **characterized in that** a plurality of wires, lines and/or cables are arranged vertically one above the other in the channel element (42).

10. E-bike frame according to any one of claims 1 - 9, **characterized in that** a conductor path element is arranged in the channel element (42) for the electric connections.

11. E-bike frame according to any one of claims 1 - 10, **characterized in that** a centerline (15) of the downtube (14) preferably extends at a vertical distance of at least 5 cm, in particular at least 10 cm and particularly preferred at least 15 cm.

12. E-bike frame according to any one of claims 1 - 11, **characterized in that** the channel element (42) is connected with the bottom bracket receptacle element (22), in particular with an upper side of the bracket receptacle element (22).

13. E-bike frame according to any one of claims 4 - 11, **characterized in that** a channel element (42) is connected with the motor receptacle, in particular an upper side of the motor receptacle.

## Revendications

1. Cadre de bicyclette électrique, comprenant
un tube inférieur (14),
un tube de selle (16) raccordé au tube inférieur (14),
une batterie (40) raccordée au tube inférieur (14),
un palier de pédalier (22) agencé dans un logement de palier de pédalier (20) et raccordé à un moteur électrique (24), et
un triangle arrière pivotant (26),
**caractérisé par**
un élément de canal (42) agencé latéralement à côté de la batterie (40) pour loger des fils électriques, des câbles de transmission, des câbles de frein et/ou des conduites hydrauliques (44),
des fils, des conduites ou des câbles Bowden menant au triangle arrière (26) étant agencés à une distance inférieure à 5 cm de l'axe de rotation du bras oscillant principal (30) du triangle arrière,
le tube inférieur (14) comprenant une extrémité ouverte et étant raccordé au tube de selle (16) exclusivement à travers le logement de palier de pédalier (20), ainsi que facultativement à travers l'élément de canal (42) agencé au-dessus du logement de palier de pédalier (20).

2. Cadre de bicyclette électrique selon la revendication 1, **caractérisé en ce que** le palier de pédalier (22) est un composant d'un ensemble à moteur comprenant le moteur électrique (24).

3. Cadre de bicyclette électrique selon la revendication 2, **caractérisé en ce que** l'ensemble à moteur est raccordé au tube inférieur (14) et/ou au tube de selle (16) au moyen d'un logement de moteur.

4. Cadre de bicyclette électrique selon l'une quelconque des revendications 1 à 3, **caractérisé en ce que** les fils, les conduites ou les câbles sont agencés à une distance inférieure à 2 cm de l'axe de rotation du bras oscillant principal (30).

5. Cadre de bicyclette électrique selon l'une quelconque des revendications 1 à 4, **caractérisé en ce que** le tube inférieur est raccordé à un tube de fourche, un tube supérieur (10) étant raccordé de préférence au tube de fourche, le tube supérieur (10) étant raccordé de préférence au tube de selle (16).

6. Cadre de bicyclette électrique selon l'une quelconque des revendications 1 à 5, **caractérisé en ce que** l'élément de canal (42) destiné à rigidifier le cadre de bicyclette est raccordé de manière fixe au tube inférieur (14) ou est formé d'un seul tenant.

7. Cadre de bicyclette électrique selon l'une quelconque des revendications 1 à 6, **caractérisé en ce que** l'élément de canal (42) présente une section transversale fermée.

8. Cadre de bicyclette électrique selon l'une quelconque des revendications 1 à 7, **caractérisé par** un élément de rigidification opposé à l'élément de canal (42), qui est de préférence raccordé de manière fixe au tube inférieur (14) ou est formé d'un seul tenant avec ce dernier.

9. Cadre de bicyclette électrique selon l'une quelconque des revendications 1 à 7, **caractérisé en ce que** plusieurs conduites de fils et/ou câbles sont agencés verticalement les uns au-dessus des autres dans l'élément de canal (42).

10. Cadre de bicyclette électrique selon l'une quelconque des revendications 1 à 9, **caractérisé en ce qu'**un élément de piste conductrice est agencé dans l'élément de canal (42) pour les connexions électriques.

11. Cadre de bicyclette électrique selon l'une quelconque des revendications 1 à 10, **caractérisé en ce qu'**une ligne médiane (15) du tube inférieur (14) s'étend en dessous du palier de pédalier (22), de préférence à une distance verticale d'au moins 5 cm, en particulier d'au moins 10 cm et de manière particulièrement préférée d'au moins 15 cm.

12. Cadre de bicyclette électrique selon l'une quelconque des revendications 1 à 11, **caractérisé en ce que** l'élément de canal (42) est raccordé à l'élément de logement de palier de pédalier (22), en particulier à un côté supérieur de l'élément de logement de palier de pédalier (22).

13. Cadre de bicyclette électrique selon l'une quelconque des revendications 4 à 11, **caractérisé en ce que** l'élément de canal (42) est raccordé au logement de moteur, en particulier à un côté supérieur du logement de moteur.
